Europäisches Patentamt

European Patent Office

Office européen des brevets

(19)

(11) Publication number: **0 293 214**
**A2**

(12)

# EUROPEAN PATENT APPLICATION

(21) Application number: **88304814.2**

(51) Int. Cl.⁴: **H 04 N 1/40**

(22) Date of filing: **27.05.88**

(30) Priority: **29.05.87 US 56630**

(43) Date of publication of application:
**30.11.88 Bulletin 88/48**

(84) Designated Contracting States:
**DE FR GB IT NL SE**

(71) Applicant: **DIGITAL EQUIPMENT CORPORATION**
**111 Powdermill Road**
**Maynard Massachusetts 01754-1418 (US)**

(72) Inventor: **Ulichney, Robert A.**
**17 Healey Street**
**Cambridge Massachusetts 02138 (US)**

(74) Representative: **Goodman, Christopher et al**
**Eric Potter & Clarkson 14 Oxford Street**
**Nottingham NG1 5BP (GB)**

(54) **System for producing dithered images on asymmetric grids.**

(57) An image dithering system for producing dithered image values in response to continuous tone image values and in response to a rectangular dither matrix generated based on a dither matrix designed for a hexagonal grid. Such a rectangular dither matrix is more immune to asymmetrical grid patterns, whose aspect ratios differ from one, than are dither matrices based on other grid patterns, most notably for square or rectangular grid patterns.

FIG. I

EP 0 293 214 A2

**Description**

## SYSTEM FOR PRODUCING DITHERED IMAGES ON ASYMMETRIC GRIDS

### CROSS REFERENCE

Robert A. Ulichney, Digital Halftoning and the Physical Reconstruction Function, the inventor's Ph.D. dissertation submitted to the Department of Electrical Engineering and Computer Science of the Massachusetts Institute of Technology (1986), which is incorporated herein by reference.

### BACKGROUND OF THE INVENTION

1. Field of the Invention

The invention relates generally to the field of digital data processing systems, and more specifically to systems for processing continuous-tone pixel image data to produce dithered pixel data representing a dithered image which is perceptually similar to the original image.

2. Description of the Prior Art

Digital images are defined in terms of picture elements, or "pixels", with each pixel being the smallest unit of an image which the data processing system can process and display. Depending on the size of the image and the resolution, a low-resolution image may have as few as several tens or a hundred pixels on a side, and high-resolution images may have as many as a thousand or more pixels on a side. Depending on a number of factors, each pixel may also have as many as eight, sixteen or more bits of data in a "continuous-tone" image. In a monochrome image, the data associated with each pixel typically identifies a "luminance" level, which is a measure of the brightness of the pixel. In a color image, the data may also identify various color components and their relative brightness levels in the pixel. For example, in a some monochrome displays, each pixel may be black (a low luminance level) or white (a high luminance level), or it may have these plus a number of intermediate, or "gray", brightness levels. The luminance of a pixel is typically expressed as a binary encoded value, such that if, for example, eight bits are used to encode each pixel, the luminance of the pixel may have up to two hundred fifty six (that is, $2^8$) different luminance levels, including the black and white extremes. If the image has several colors, bits must also be used to identify the color, and, perhaps, the relative brightness level of each color in the pixel.

While an image may be defined in terms of its "continuous-tone" image values, in which each pixel is defined by eight or more bits of data, display devices such as video display terminals and printers normally can only accommodate one or at most a few bits of data for each pixel to define the display characteristics, in particular the luminance, of the displayed pixel. Generally, images in which a pixel's luminance is defined by one or only a few bits of data (but fewer bits than are required for the continuous tone image) which appear similar to the continuous tone image are termed "dithered" images. Dithered images in which a pixel's luminance is defined by one bit per pixel are termed "halftone" images. The continuous tone pixel data is processed to generate the output luminance values for the pixels ("dithered pixel values") to define the halftone or dithered image for the display device.

Several dithering techniques have been developed to generate dithered pixel values so that the halftone or dithered image as rendered by a display device is perceptually similar to the actual image. Generally, values from a dither matrix are applied to the continuous tone pixel values to generate dithered pixel values which are transmitted to the display device. See, for example, J. Foley and A. van Dam, Fundamentals of Interactive Computer Graphics, pp. 597-601. The dither matrix is an array of threshold values. Starting with, for example, the left uppermost corner of the image, the continuous tone pixel value of each pixel is compared to the dither value in the entry in the corresponding location in the dither matrix. If the continuous tone value of a pixel is greater than the value of the corresponding location in the dither matrix, a dithered pixel value of "1" is assigned to the pixel, otherwise the pixel is assigned the dither pixel value "0", in a halftone display. If the output is to be a non-binary dithered output, that is, if the dithered pixel values are to have more than two possible values, the dither matrix is applied in the same way, but the dithered pixel values for the various pixels are calculated in a more complex manner to produce the multiple-valued output.

After all of the continuous tone pixel values in the left uppermost region of the image are processed in this way, the continuous tone pixel values in the adjacent region to the right are compared to the values in the dither matrix. This procedure continues until all of the upper rows of pixels are processed (the number of rows processed at one time corresponds to the number of rows in the dither matrix). Thereafter, the continuous tone pixel values of the next set of rows of pixels are processed the same way. The procedure is repreated until the continuous tone pixel values of all of the rows of pixels are processed. Pixels whose dithered pixel values are "1" are displayed by the display device at a high luminance level (that is, light), and pixels whose dithered pixel values are "0" are displayed at a low luminance level (that is, dark). Essentially, the dither matrix

**0 293 214**

is said to "tile" the image in this procedure, since the repetitive application of the dither matrix to the image is similar to a tile covering laid on a floor, for example.

A primary problem in this procedure is the construction of a dither matrix which produces a satisfactory dithered image which can be displayed with a minimum of artifacts which are not in the continuous tone image but which may be generated as a result of the dithering process. Several such matrices are described in B. E. Bayer, An Optimum Method For Two-Level Rendition Of Continuous-Tone Images, Proc. IEEE Int. Conf. Commun., Conference Record (1973), pp. (26-11) - (26-15).

Generally, existing dithering techniques, such as described above, produce acceptible dithered images if the aspect ratio of the image is one, that is, if the number of pixels per unit dimension is the same in the horizontal and vertical directions. However, in many cases, the aspect ratio differs substantially from one, that is, the number of pixels per unit dimension in one direction (that is, horizontal or vertical) differs substantially from the number of pixels in the other direction. Such images are said to be on an "asymmetric grid". In such cases, the dithered image normally contains undesirable artifacts such as extensive banding, particularly in portions of the image which have constant or slowly varying brightness levels. The banding tends to increase in severity with increasing asymmetry, that is, as the aspect ratio gets further from one.

## SUMMARY OF THE INVENTION

The invention provides a new and improved image dithering system for producing dithered images from continuous tone pixel data which is particularly useful in connection with images whose aspect ratios differ from one, that is, whose pixels are on an asymmetric grid.

In brief summary, the invention provides a new dithering system in which a dither matrix is generated in a pattern which is neither square nor rectangular. In particular, the dither matrix is generated in a hexagonal pattern. The system processes the dither matrix into a rectangular pattern for tiling over an image.

Dither matrices generated in a hexagonal pattern are more immune to aspect ratio asymmetries, that is, it produces fewer undesirable artifacts such as banding, than do dither matrices generated in a rectangular or square pattern. Accordingly, the invention provides dithered images which are more perceptually similar to continuous tone images than were provided by previous dithering systems, particularly when their aspect ratios differ from one.

## BRIEF DESCRIPTION OF THE DRAWINGS

This invention is pointed out with particularity in the appended claims. The above and further advantages of this invention may be better understood by referring to the following description taken in conjunction with the accompanying drawings, in which:

Figs. 1 and 2 are functional block diagrams of image dithering systems constructed in accordance with the invention;

Fig. 3 is a functional block diagram of a dither matrix generator useful in the image dithering systems depicted in Figs. 1 and 2; and

Figs. 4A through 4J are diagrams useful in understanding the operation of the dither matrix generator illustrated in Fig. 3.

## DETAILED DESCRIPTION OF AN ILLUSTRATIVE EMBODIMENT

1. General Description

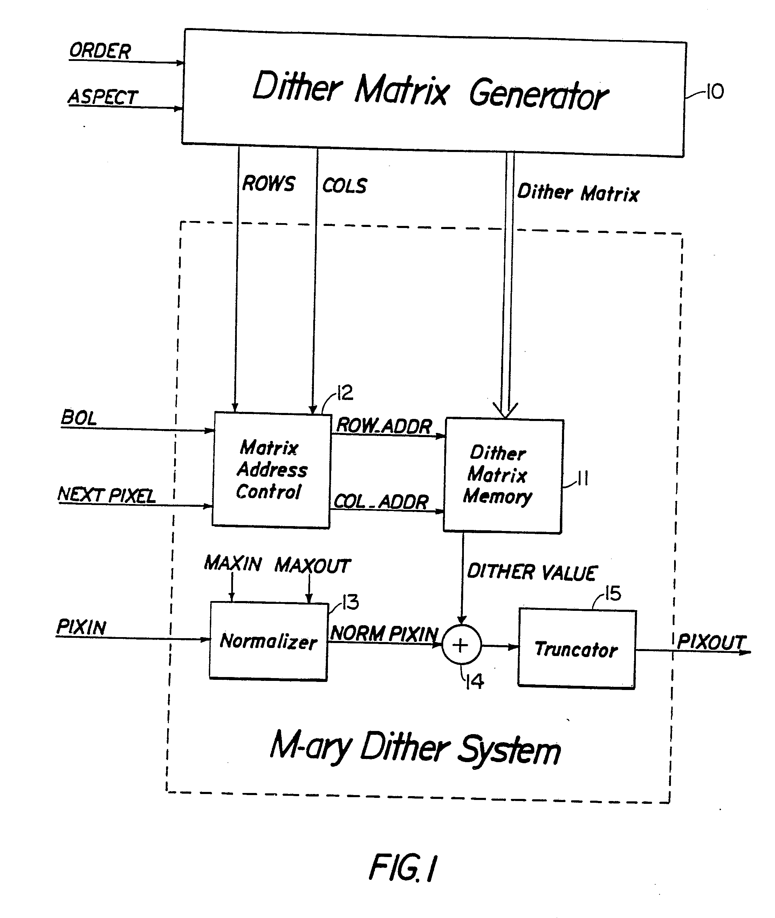

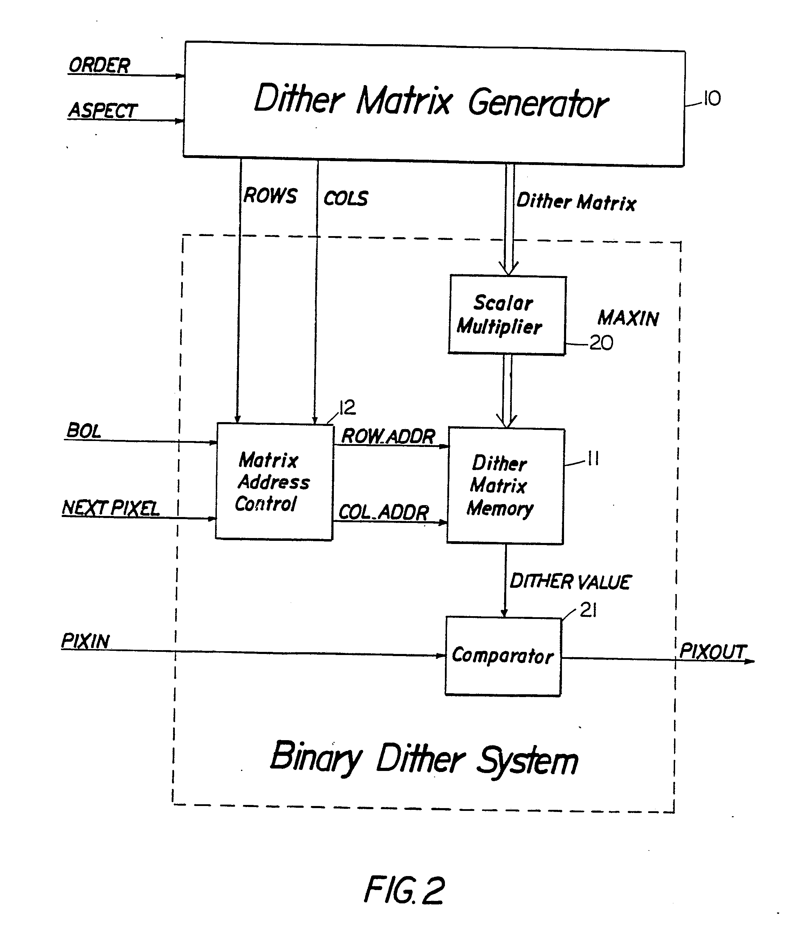

With reference to the Figs., a dithering system constructed in accordance with the invention iteratively receives from an external source (not shown) PIXIN input continuous tone pixel values each having a selected number of digital data bits, and produces PIXOUT output dithered pixel values represented by fewer digital data bits than the continuous tone pixel values which may be displayed by a display device (also not shown). Fig. 1 depicts a dithering system in which each PIXOUT output dithered pixel values may be represented by any predetermined number of data bits (that is, it produces m-ary output values), and Fig. 2 depicts a dithering system in which each PIXOUT output dithered pixel values has one data bit which may have either of two values (that is, it produces binary output values).

Specifically, with reference to Fig. 1, in response to an ORDER value and an ASPECT value from the external source, a dither matrix generator 10 transmits a dither matrix for storage in a dither matrix memory 11, and a ROWS value and a COLS columns value to a matrix address control 12. The ROWS value identifies the number of rows, and the COLS columns value the number of columns, in the dither matrix which the dither matrix generator 10 transmits to the dither matrix memory 11. The ASPECT value identifies the aspect ratio of the display on which the PIXOUT output dithered pixel values will be displayed.

The dither matrix stored in the dither matrix memory 11 is normalized, that is, all of the values in the dither matrix produced by the dither matrix generator 10 are between dither values zero and one. The PIXIN input

3

continuous tone pixel values are coupled to a normalizer 13, which normalizes them to produce NORM PIXIN normalized input continous tone pixel values, using the ratio of a MAXOUT input value and a MAXIN input value from the external source. The MAXOUT input value is the maximum PIXOUT pixel output value, and the MAXIN input value is the maximum PIXIN input continuous tone pixel value. The normalizer 13 transmits the NORM PIXIN normalized input continuous tone pixel value to one input of an adder 14.

The matrix address control 12 operates in response to two other inputs, namely a BOL beginning of line input and a NEXT PIXEL input, both of which are also supplied by the external source. Whenever a PIXIN input continuous tone pixel value for a new pixel is coupled to normalizer 13, the NEXT PIXEL input is asserted. If a PIXIN input continuous tone pixel value coupled to normalizer 13 represents the continuous tone pixel value of the first pixel in a line in an image, the external source asserts the BOL beginning of line input. In response to the assertion of the NEXT PIXEL input, the matrix address control 12 generates a ROW ADRS row address value and COL ADRS column address value, which are used to select a value from the dither matrix stored in the dither matrix memory 11.

The matrix address control 12 essentially includes two address counters (not shown), one providing the ROW ADRS row address value and the other providing the COL ADRS column address value. The column address counter is incremented in response to the assertion of the NEXT PIXEL input, and the row address counter is incremented in response to the assertions of the BOL beginning of line input. When the column address counter increments to produce a value corresponding to the COLS columns value which was received from the dither matrix generator, it is reset to zero. Similarly, when the row address counter increments to produce a value corresponding to the ROWS value received from the dither matrix generator, it is also reset to zero. Thus, the row address counter produces ROW ADRS row address values from zero to one less than the ROWS value, and the column address counter produces COL ADRS column address values from zero to one less than the COLS columns value.

Accordingly, when a PIXIN input continuous tone pixel value is coupled to normalizer 13, the assertion of the NEXT PIXEL input enables the column address counter to increment. If the value of the output of the column address counter does not equal the COLS columns value, it is transmitted as the COL ADRS row address value to the dither matrix memory 11. On the other hand, if the value of the output of the column address counter does equal the COLS value, the column address counter is reset to zero, which is the COL ADRS column address value transmitted to the dither matrix memory.

If the BOL beginning of line input is not also asserted, the row address counter does not change and the ROW ADRS row address value is unchanged. On the other hand, if the BOL beginning of line input is asserted, the row address counter is enabled to increment. If the value of the output of the row address counter does not equal the ROWS value, the output of the row address counter is transmitted to the dither matrix as the ROW ADRS row address value However, if the output of the row address counter does equal the ROWS value, the row address counter is reset to zero, which is the ROW ADRS row address value transmitted to the dither matrix memory.

The contents of the location in the dither matrix memory 11 selected by the ROW ADRS row address and COL ADRS column address values from the matrix address control 12 are coupled to the other input of adder 14. It will be appreciated that, when processing continuous tone pixel values in a single line of an image, the matrix address control 12, by repeating the COL ADRS column address values, effectively enables the contents of a single row in the dither matrix stored in the dither matrix memory to be iteratively retrieved and transmitted to the adder 14. In addition, when processing the sequential lines of the image, the matrix address control 12, by repeating the ROW ADRS row address values, effectively enables the contents of the various rows in the dither matrix stored in the dither matrix memory 11 to be iteratively identified as containing the row locations to be retrieved. The matrix address control 12 thus enables the dither matrix stored in the dither matrix memory 11 to effectively tile the image defined by the PIXIN continuous tone pixel values from the external source.

After the NORM PIXIN normalized pixel continuous tone input value and the dither value from the selected location in the dither matrix memory 11 are coupled to the adder 14, the adder 14 generates a sum which is transmitted to a truncator 15. The truncator 15 eliminates selected low order bits of the sum, which may represent fractional parts of a luminance value, to produce an integer PIXOUT dithered pixel output value having a predetermine number of bits.

The system depicted in Fig. 1 operates in any "m-ary" system, that is, it will produce PIXOUT dithered pixel output values having any number of digital output bits. Fig. 2 depicts a system which is adapted to produce binary PIXOUT dithered pixel output values. The system depicted in Fig. 2 is similar to the system depicted in Fig. 1, except that it does not have a normalizer 13, an adder 14 and a truncator 15. Instead, the binary system depicted in Fig. 2 includes a scalar multiplier 20, which multiplies the normalized values in the dither matrix from the dither matrix generator by the MAXIN maximum continuous tone pixel input value. The PIXIN continuous tone pixel input values are coupled to one input of a comparator 21. As each PIXIN continuous tone pixel input value is coupled to the comparator 21, the matrix address control 12 enables the dither matrix memory 11 to couple, as described above, a matrix value to a second input of the comparator 21. If the PIXIN continuous tone pixel input value is greater than the dither value from dither matrix memory 11, the comparator 21 transmits a one as the PIXOUT dithered pixel output value, otherwise it transmits a zero as the PIXOUT dithered pixel output value.

2. Dither Matrix Generator

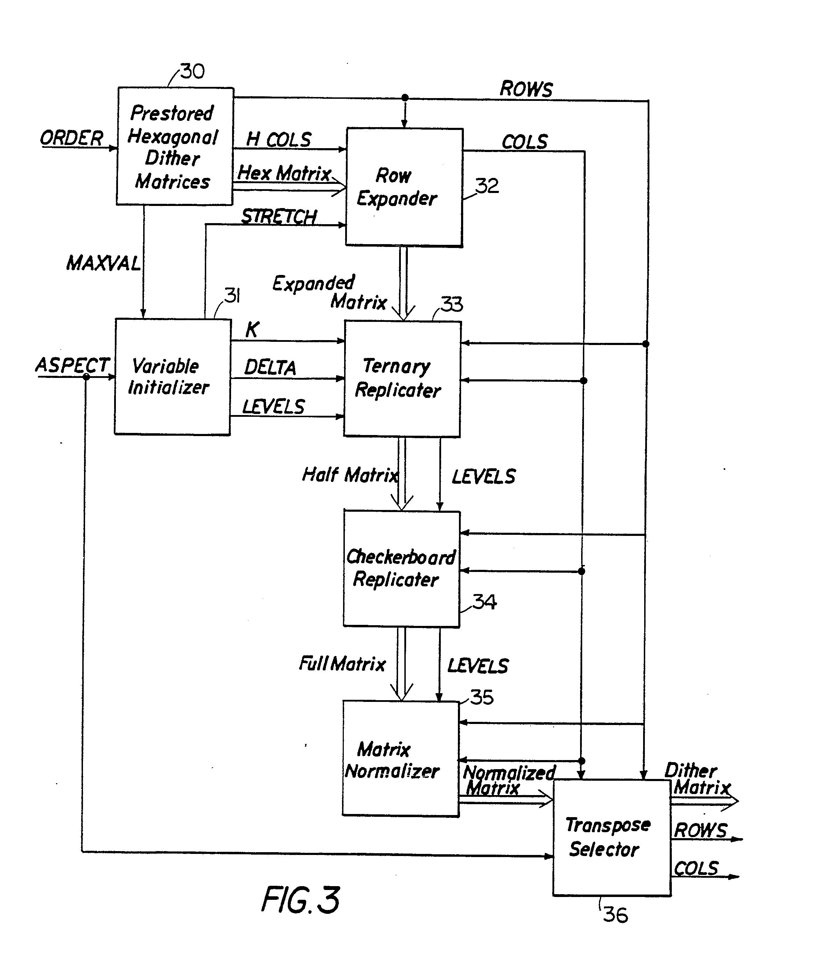

Fig. 3 illustrates the details of a dither matrix generator 10 for use with either the m-ary system depicted in Fig. 1 or the binary system depicted in Fig. 2. The dither matrix generator 10 includes a memory 30 which stores a set of preselected hexagonal dither matrices, one of which is selected in response to the ORDER value from the external source.

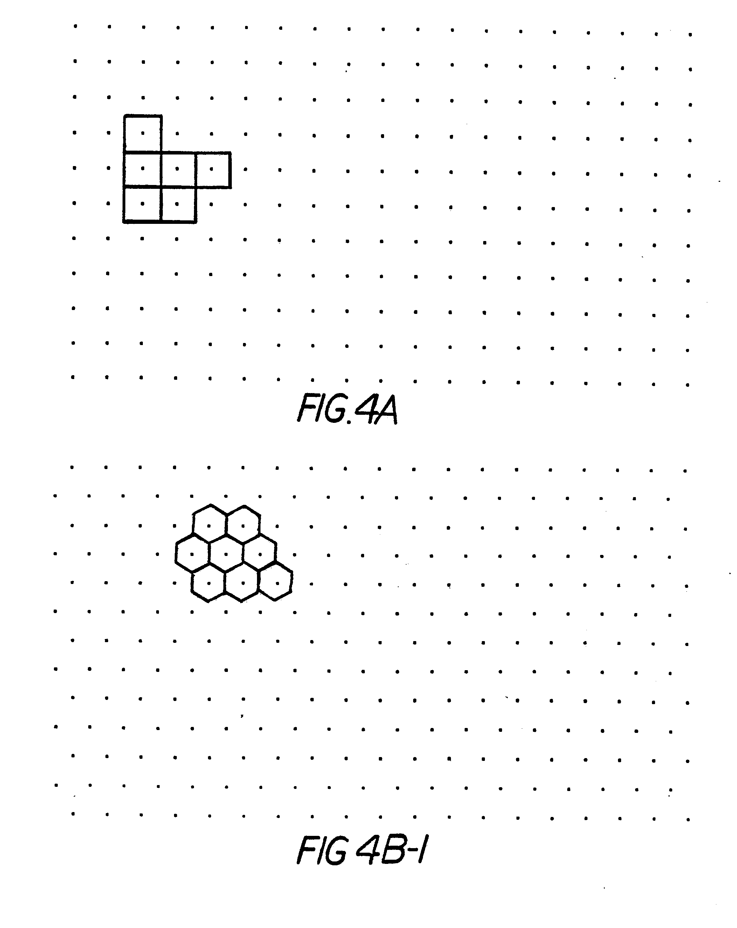

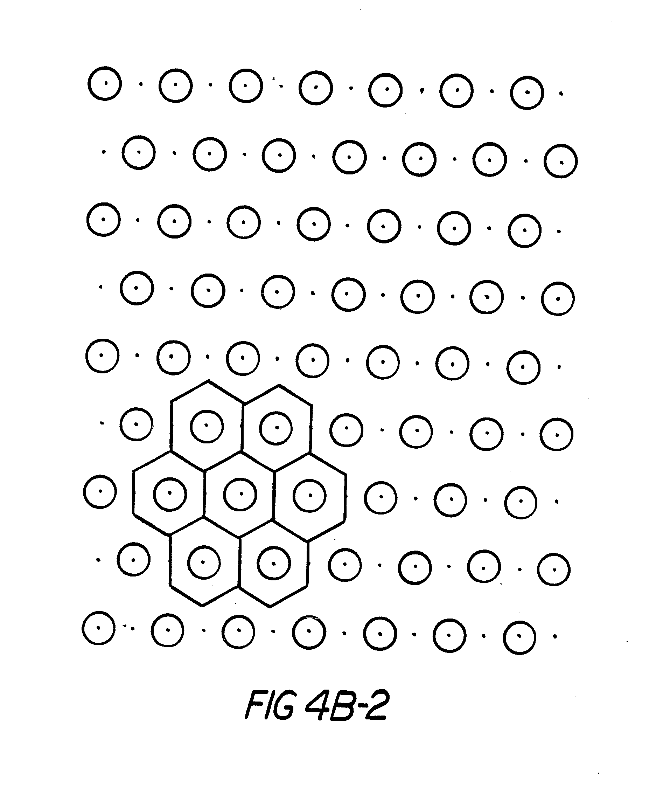

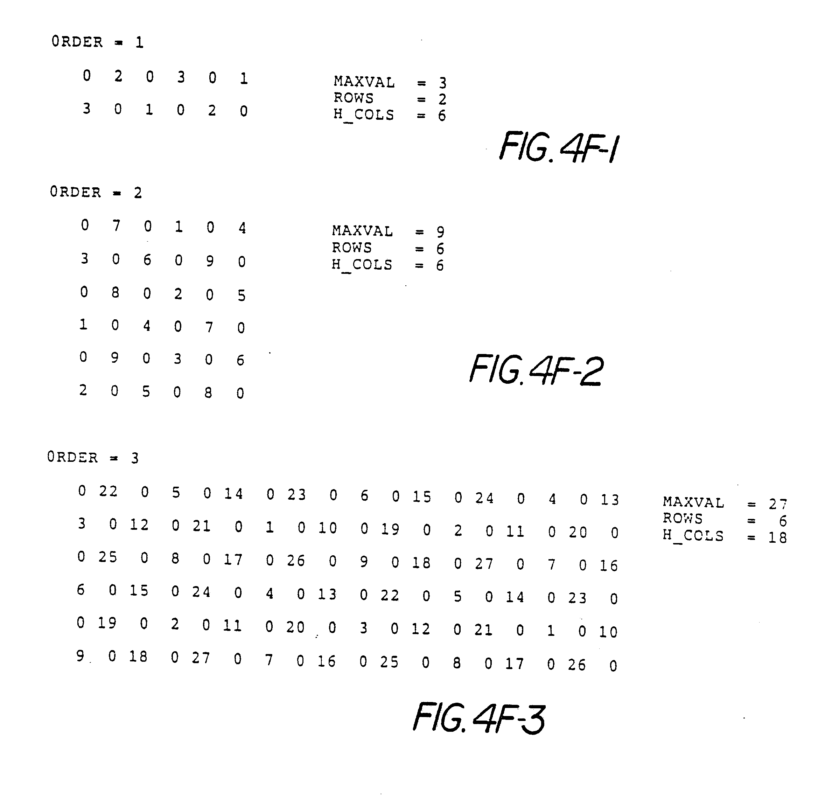

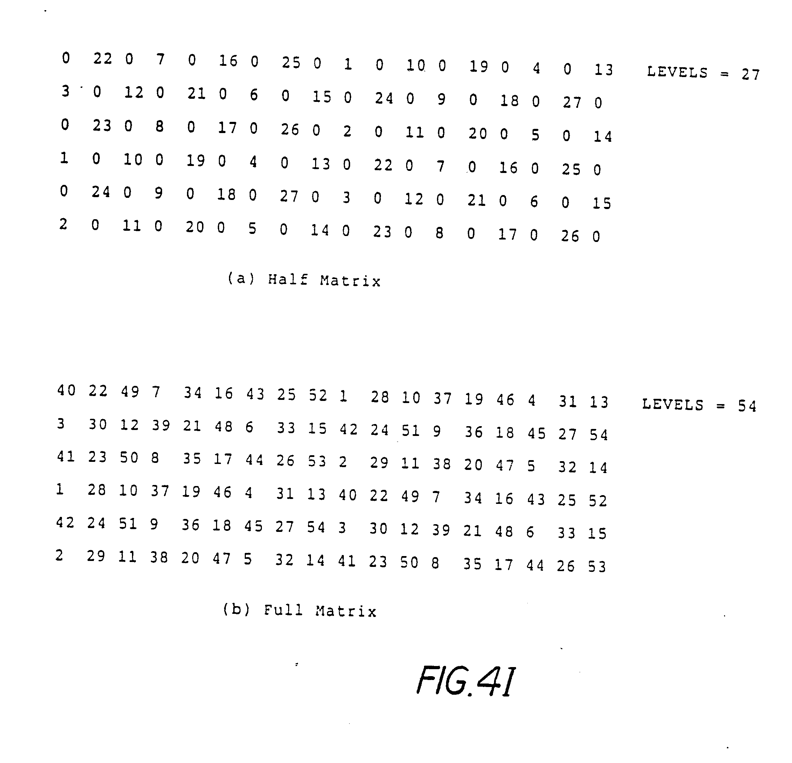

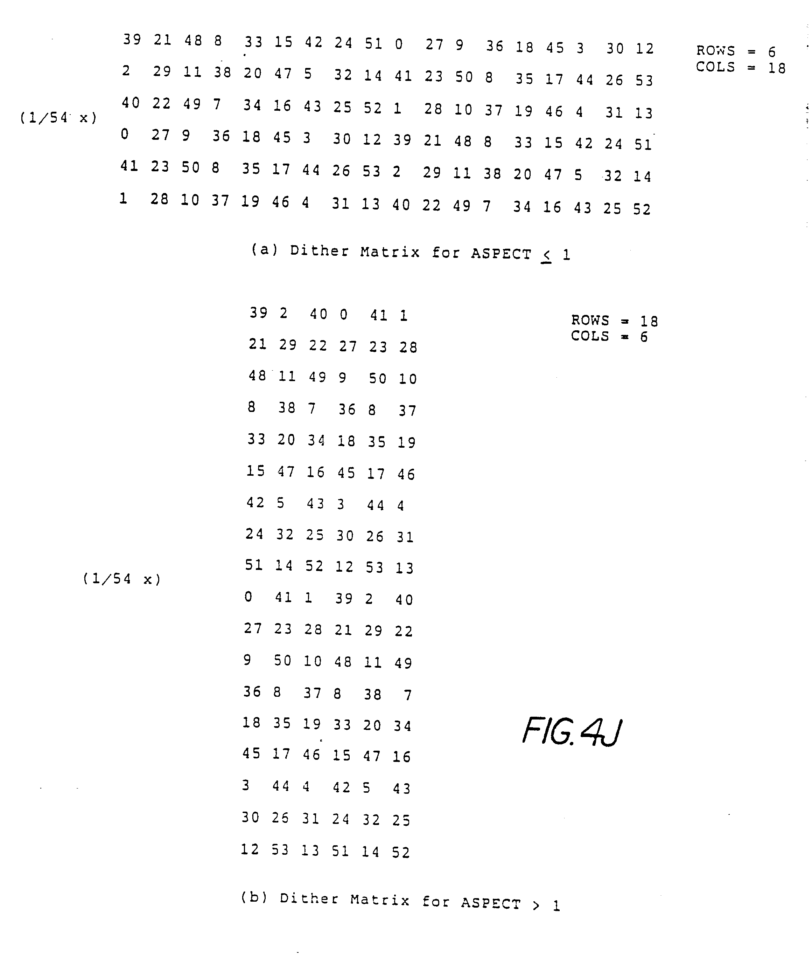

By way of background, the dither matrix generator 10 uses dither matrices designed for hexagonal grids, rather than for square grids as were used by systems in the past. Hexagonal grids will be explained in connection with Figs. 4A through 4C. Figs. 4A and 4B depict a square grid and a hexagonal grid, respectively. In the grid pattern depicted in the Figs., the center of each pixel may be considered as being represented by a dot, that is, the center of a pixel is positioned at the location identified by the dot. The nature of the grid, that is, whether it is square or hexagonal, is defined by the shape of the pixels on the grid. In turn, the boundaries of a pixel are defined by the line segments that bisect the lines which extend from the center of the pixel to the centers of its nearest neighbors.

In the sqare grid depicted in Fig. 4A, the aspect ratio, which corresponds to the ratio between the distance between dots and the distance between lines, equals one. In a hexagonal grid, such as depicted in Fig. 4B-1, the dots in alternate rows are displaced by one-half a period, that is, one half the distance between dots. In such a hexagonal grid, if it is regular, that is, if, for each pixel, the line segments defining the boundaries of the pixel all have the same length, the aspect ratio may have two values, namely two times the square root of three (approximately 3.46) and one-half the square root of three (approximately 0.87).

A hexagonal grid may also be formed from a rectangular grid. Fig. 4B-2 depicts a rectangular grid on which a hexagonal grid has been formed by using every second dot in each row, with the dots in adjacent rows defining the hexagonal grid being offset by one dot, as shown by the circled dots in the Fig. (The grid pattern depicted in Fig. 4B-2 corresponds to the grid pattern depicted in Fig. 4B-1, with the addition of dots between each pair of dots in a row in Fig. 4B-1.) It will be appreciated that, as the aspect ratio increasingly differs from one, a hexagonal grid may be defined by subsampling the asymmetric rectangular grid in the closer-spaced direction so as to use every second, sixth, eighteenth (that is, every $2 \times 3^K$th, where "K" is an integer)) dot in a row, with the dots which define the hexagonal grid pattern in alternate rows being offset appropriately.

As noted above, in the hexagonal grid depicted in Fig. 4B-1, the hexagonal pixel pattern is regular, that is, the edges of the hexagonal pixels all have the same length. It will be appreciated that suitable hexagonal patterns can also be formed if the aspect ratios differ from these values, but the hexagons defined thereby will not be regular. The system disclosed herein produces satisfactory dithered images when the aspect ratios are such that the subsampled hexagonal grids are either regular or irregular.

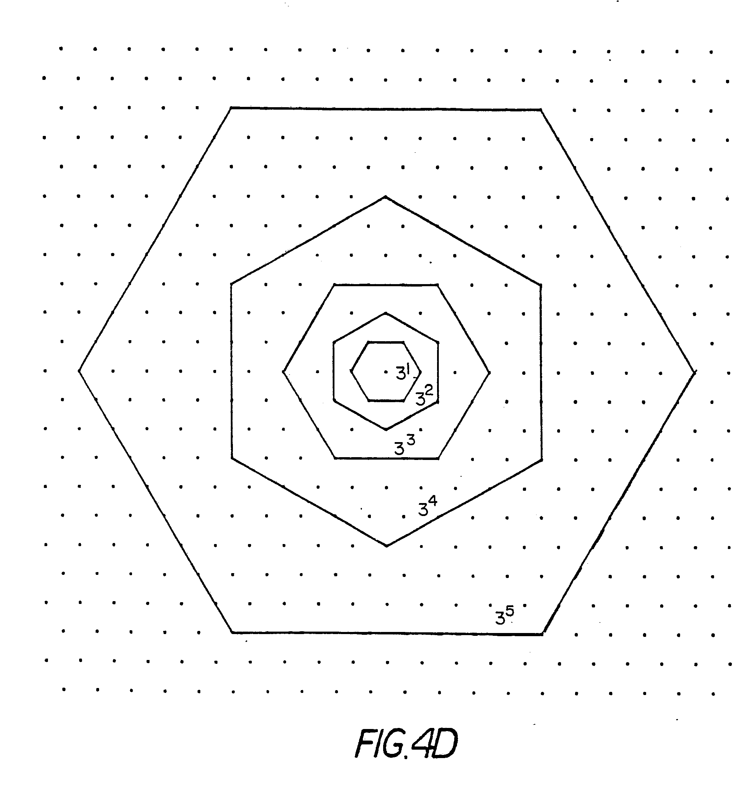

Fig. 4D depicts a hexagonal grid showing hexagonal patterns of various orders, namely, orders one through five, with the inner hexagon comprising the hexagon of order one, and the outer hexagon comprising the hexagon of order five It will be recognized that the dot grid pattern corresponds to the pattern depicted in Fig. 4B-1; that is, with the dots in adjacent rows being offset by one-half the distance betwen dots; a rectangular grid would include dots between each of the dots in each row depicted in the Fig. The order of a hexagonal pattern corresponds to a value which is the cube root of the number of dots encompassed by a hexagon, which is the number of dots within the hexagon's periphery plus the number of dots along three continuous edges of the hexagon, including the two vertices where the three edges intersect, but excluding the two free end points of the edges.

Thus, the small hexagonal pattern on Fig. 4D, marked $3^1$, encompasses three dots, including the center dot and the two vertices; the order of this hexagon is one. The next larger hexagonal pattern on Fig. 4D, which is marked $3^2$, encompasses nine dots (that is, three squared), including the seven interior dots and the two vertices; the order of this hexagonal pattern is two. Similarly, the next larger hexagonal pattern, which is marked $3^3$, encompasses twenty seven dots (that is, three cubed), which includes the nineteen interior dots, two dots along each of the three contiguous edges, and the two dots comprising the vertices; the order of this hexagonal pattern is three. Fig. 4D also depicts hexagonal patterns of orders four and five, and higher order patterns may also be generated on appropriately sized grids.

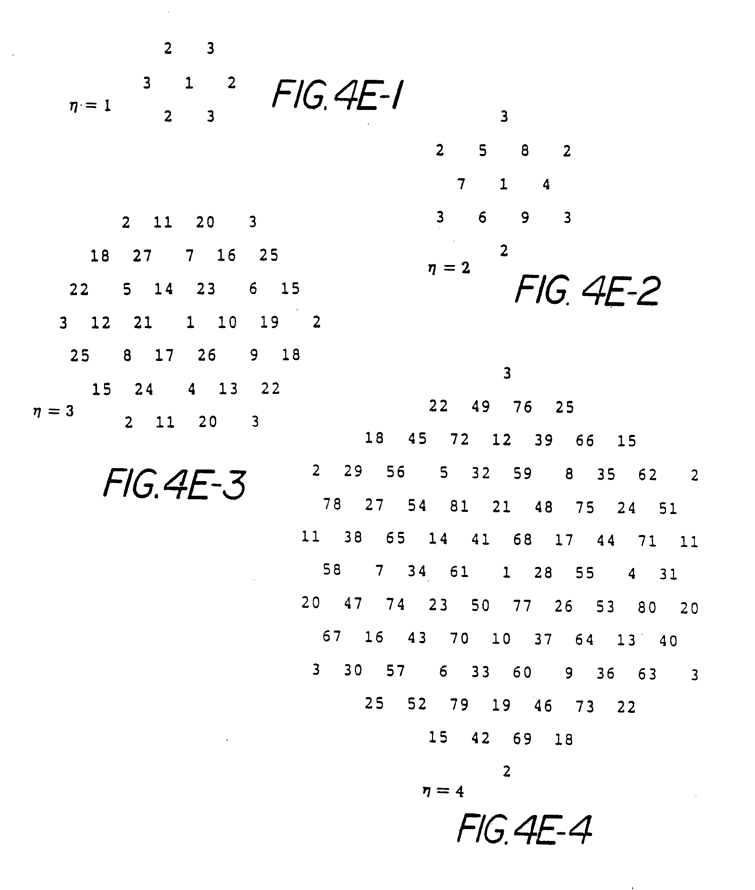

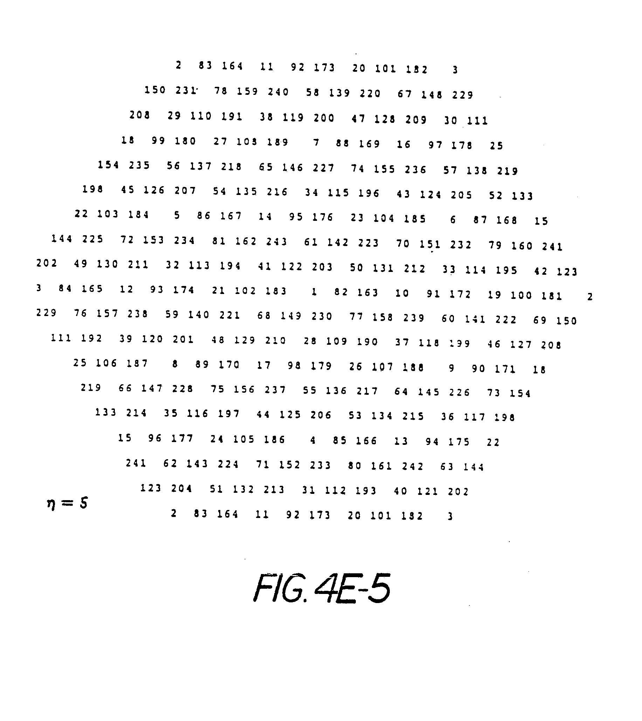

Fig. 4E-1 through 4E-5 depict illustrative hexagonal dither matrices for the various orders of hexagonal patterns depicted in Fig. 4D. The various values depicted in the location in each matrix relate to a dither value at the value's location in the hexagonal grid. For purposes of illustration, the dither matrices depicted in Figs. 4E-1 through 4E-5 are not normalized. As explained below, to normalize a matrix, each value in the matrix must be reduced by one and divided by the largest value in the dither matrix. Thus, the values in a normalized matrix for order one range from zero in the center to two-thirds in the locations identified by "3" in the matrix depicted in Fig. 4E-1.

The dither matrices depicted in Figs. 4E-1 through 4E-5 are not unique, but instead are illustrative. By inspection of the dither matrices, a dither matrix is constructed such that it may be replicated so as to tile an image; that is, dither values along the upper left edge correspond to the dither values along the lower right edge, and dither values along the lower left edge correspond to the dither values along the upper right edge. A method of generating the hexagonal dither matrices is described in the inventor's aforementioned dissertation, Robert A. Ulichney, Digital Halftoning and the Physical Reconstruction Function, at pages 157 through 166.

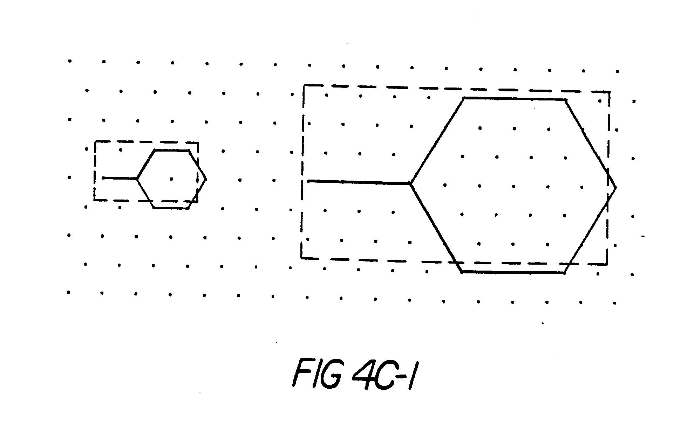

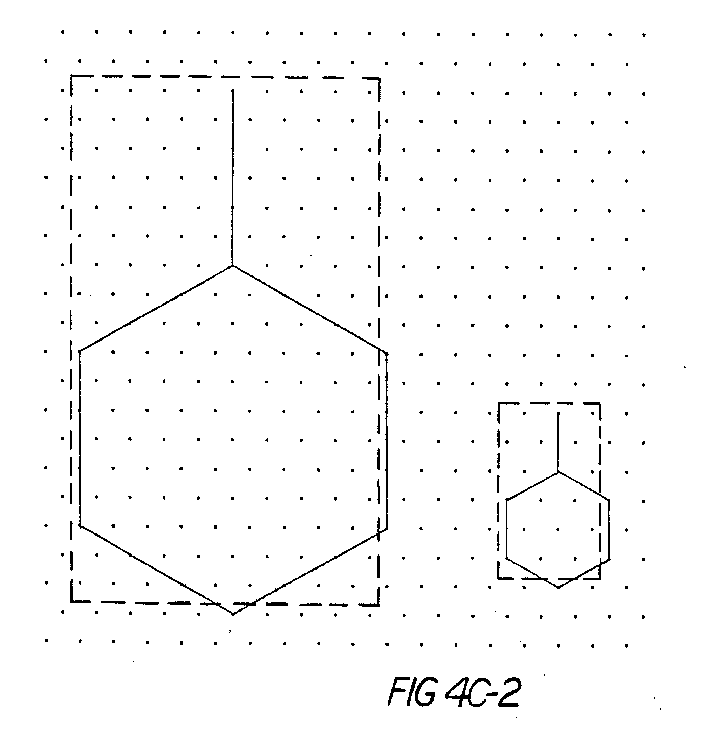

To simplify subsequent processing, the dither matrix memory 30 does not store the hexagonal dither matrices in hexagonal form. Instead, rectangular dither matrices are formed based on the hexagonal dither matrices of various orders, and the rectangular matrices are stored in the dither matrix memory 30. Figs. 4C-1 and 4C-2 depict the rectangular samplings of the hexagonal grid patterns which provide the rectangular dither matrices. In particular, Fig. 4C-1 depicts, in broken lines, rectangular patterns each of which defines two entire hexagonal dither matrices of orders one (to the left) and three (to the right). Similarly, Fig. 4C-2 depicts, in broken lines, rectangular patterns each of which defines two entire hexagonal dither matrices of orders two (to the right) and four (to the left). Similar rectangular patterns can also be provided to define hexagonal dither matrices of higher order in a similar manner. The rectangular pattern required to define hexagonal dither matrices of odd order have their longer dimension disposed horizontally, and the rectangular pattern required to define hexagonal dither matrices of even order have their longer dimension disposed vertically.

Figs. 4F-1 through 4F-3 depict the actual rectangular dither matrices for orders one through three, respectively. It will be appreciated that the contents of the dither matrices include zeroes in the locations associated with the dots on the rectangular grid (see Fig. 4B-2) which are not used to define the hexagonal grid pattern in Figs. 4C-1 and 4C-2.

In addition to the prestored hexagonal dither matrices for the various orders, the memory 30 includes, for each order, a MAXVAL maximum dither value, a ROWS value identifying the number of rows in the hexagonal dither matrix and an H COLS hexagonal columns value identifying the number of columns in the hexagonal dither matrix. In response to the ORDER value from the external source, the matrix memory 30 transmits the prestored hexagonal dither matrix and H COLS hexagonal columns value to a row expander 31 and the MAXVAL maximum dither value to a variable initializer 31. The variable initializer 31 also receives the ASPECT value from the external source, and in response to it and the MAXVAL maximum dither value generates four variable values K, STRETCH, DELTA and LEVELS as follows:

$$(1/3)^{K+1} < \text{ASPECT} \leq (1/3)^{K} \quad (\text{for ASPECT} \leq 1),$$

$$3^{K} \leq \text{ASPECT} < 3^{K+1} \quad (\text{for ASPECT} > 1),$$

that is, $K = \text{int}\{\text{abs}[\log_3(\text{ASPECT})]\}$,

where int $\{\}$ is integer truncation, and

abs $[]$ is absolute value,

$$\text{STRETCH} = 3^{K},$$

$$\text{DELTA} = 2K^{2}, \text{ and}$$

$$\text{LEVELS} = \text{MAXVAL}$$

It will be appreciated that the value of LEVELS relates to the number of gray luminance levels represented by the values in the hexagonal dither matrix and that the value K relates to the application of a hexagonal grid pattern to a rectangular pattern of diverse aspect ratios. As the aspect ratio increasingly diverges from the value one, the value of K increases. Similarly, as the aspect ratio diverges from one, the number of dots in the rectangular grid (see Fig. 4B-2) which are between the dots taken as defining the hexagonal pattern also increases. For example, Fig. 4B-2 shows that, for a rectangular grid pattern with an aspect ratio of one-half, the hexagonal grid uses every other dot, and with a rectangular grid of an aspect ratio increasingly divergent from one, more dots in each row will fall between those defining the hexagonal grid. The same occurs when the aspect ratio is above one, except that dots in the same column in adjacent rows in the grid pattern fall between the dots defining the hexagonal grid. Thus, as the value of K increases, the number of dots in the rectangular grid between the dots which define the hexagonal pattern also increases.

With this background, in response to the ORDER value from the external source, the dither matrix memory 30 transmits its contents corresponding to the ORDER value, specifically the MAXVAL maximum dither value to the variable initializer 31 and the HEX MATRIX hexagonal matrix, H_COLS hexagonal matrix columns value and ROWS hexagonal matrix rows value to a row expander 32. The variable initializer, in response to the MAXVAL maximum dither value and ASPECT value determines values for the variables STRETCH, which is also coupled to the row expander 32, and K, DELTA and LEVELS, which are transmitted to a ternary replicator 33.

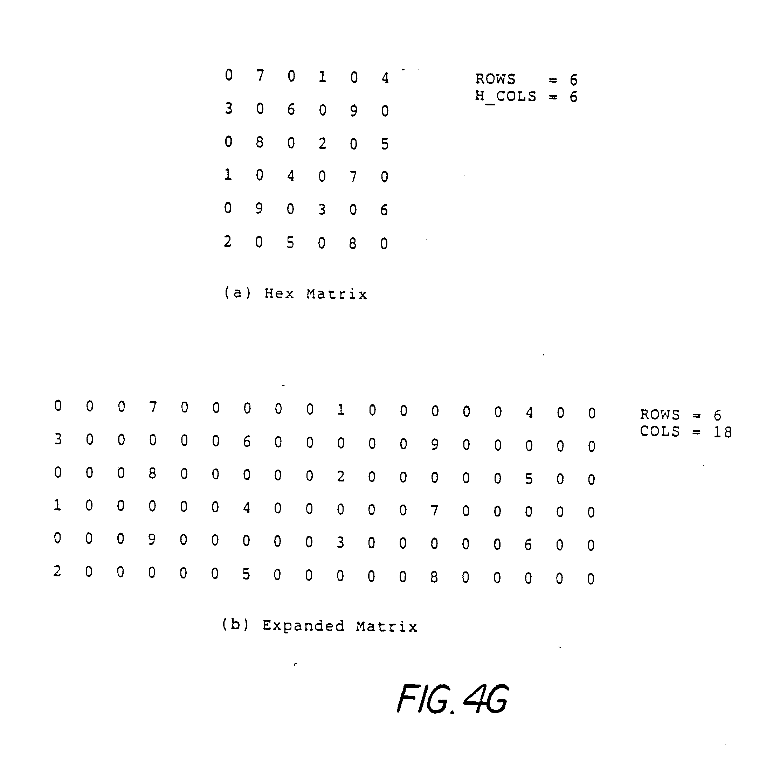

The row expander receives the HEX MATRIX hexagonal matrix and H_COLS hexagonal matrix columns values from the dither matrix memory 30 and the STRETCH value from the variable initializer 31 and generates an EXP MATRIX expanded matrix and COLS columns value in response thereto. Fig. 4G depicts the values received and transmitted by the row expander 32 when ORDER input to dither matrix memory 30 has the value two and K has the value one.

As described above, the STRETCH value is related to the aspect ratio of the continuous tone image, and as the aspect ratio diverges from the value one, the number of dots in each row in the rectangular grid pattern between the dots which define the hexagonal pattern increases. The row expander 32 expands the rows of the HEX MATRIX hexagonal matrix from the dither matrix memory to compensate for the resulting grid assymetry. In particular, to generate the EXP MATRIX expanded matrix from the HEX MATRIX hexagonal matrix, the row expander inserts between the value in each row of the HEX MATRIX hexagonal matrix a number of zeroes corresponding to one less than value of STRETCH from the variable initializer 31. In additional, the COLS columns output value reflects the number of columns in the EXP MATRIX expanded matrix. That is,

$$\text{EXP MATRIX } [i, \text{ STRETCH } x \ j] = \text{HEX MATRIX } [i,j]$$

where i and j are row and column indices, respectively, of the HEX MATRIX hexagonal matrix

and

$$\text{COLS } = \text{ STRETCH } x \ \text{H\_COLS}$$

Other entries in the EXP MATRIX expanded matrix are zeroes. Thus, if the aspect ratio is close to the value one, the value of STRETCH is zero, and so no row expansion takes place, that is, no zeroes are inserted into the rows of the HEX MATRIX hexagonal matrix. On the other hand, as the aspect ratio diverges from one (that is, as it increases or decreases from the value one), the value of STRETCH increases, and the number of zeroes inserted between the values of the HEX MATRIX hexagonal matrix to form the EXP MATRIX expanded matrix also increases.

Other elements of the matrix generator 10 depicted in Fig. 3 provide non-zero dither values for the zero values in the EXP MATRIX expanded matrix generated by the row expander 32. The ternary replicator receives EXP MATRIX expanded matrix from the row expander 32, and, using the K, DELTA and LEVELS values from the variable initializer 31, as well as values of the EXP MATRIX expanded matrix, generates a HALF MATRIX. In the HALF MATRIX every second entry in each row is non-zero. A checkerboard replicator 34 receives the HALF MATRIX and provides a FULL MATRIX all of whose entries are non-zero.

Specifically, the ternary replicator 33 operates as follows. For the non-zero entries in the EXP MATRIX expanded matrix, the ternary replicator transfers those entries into the HALF MATRIX unchanged. Thereafter, the ternary replicator generates values for intermediate entries in each row. Specifically, the ternary replicator, in each row, initialy provides a value for an entry in the HALF MATRIX which is located to the right of each non-zero entry a number of entries equal to the value DELTA, which value corresponds to the value of the non-zero entry plus the value of LEVELS from the variable initializer 31. Then, the ternary replicator 33 repeats the operation by providing a value for the entry in the HALF MATRIX which is located to the right of the just-produced entries by a number of entries again equal to the value DELTA. In this case, the value provided in the HALF MATRIX entry corresponds to the value of the just produced entry plus the value LEVELS.

If, in the operation, the number of entries extends past the right edge of the HALF MATRIX, the count continues from the left edge of the HALF MATRIX Thereafter, the ternary replicator revises the values of the variables K, DELTA and LEVELS, trebling the value of LEVELS, reducing the value of DELTA by a factor of three, and reducing the value of K by one. These operations are repeated until the value of K is reduced to zero.

Otherwise stated, the ternary replicator 33 produces a HALF MATRIX based on the contents of the EXP MATRIX expanded matrix from the row expander 33 as follows:

    (a) initially, for all non-zero entries EXP MATRIX [i,j] in each row [i]:
    HALF MATRIX [i,j] = EXP MATRIX [i,j]
    (b) then, while the value of K does not equal zero,
        (I) for all non-zero values EXP MATRIX [i,j] in each row [i], assign non-zero values to HALF MATRIX entries:
        HALF MATRIX [i, (j + DELTA) modulo COLS] = EXP MATRIX [i,j] + LEVELS
        HALF MATRIX [i, (j + 2 x DELTA) modulo COLS] = EXP MATRIX [i,j] + 2 x LEVELS, and
        (II) revises values of variables from variable initializer 31:
        LEVELS = 3 x LEVELS
        DELTA = DELTA / 3, and
        K = K-1

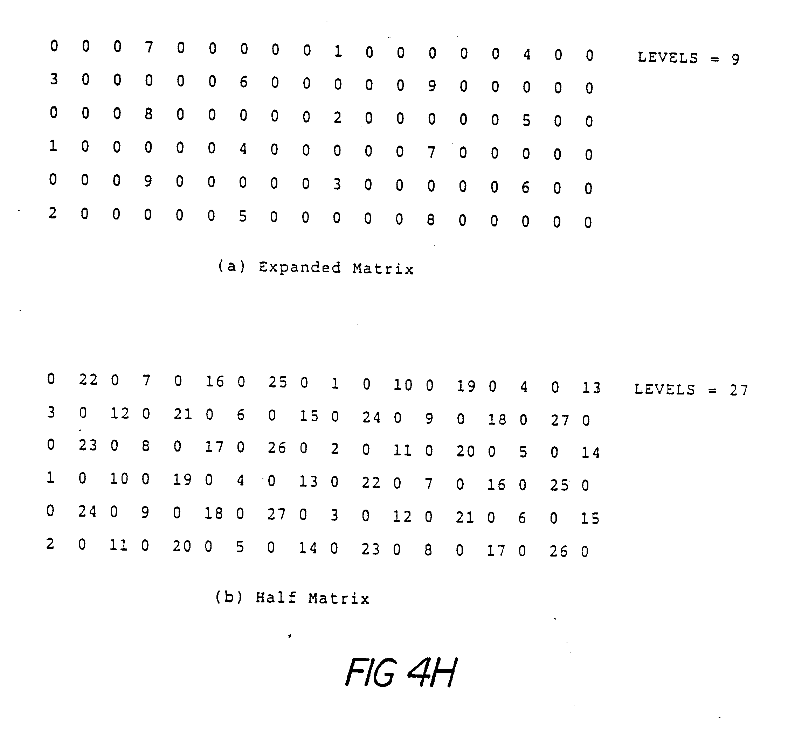

Fig. 4H, at the bottom, depicts the HALF MATRIX for the EXP MATRIX expanded matrix depicted in Fig. 4G. With reference to Fig. 4H, it will be appreciated that the value "7" in the fourth column of the first row is provided by the EXP MATRIX expanded matrix, which is depicted at the top in Fig. 4H. Since, in the example depicted in Fig. 4H, K has the value one, DELTA has the value two, the second entry to the right of the entry with "7" has the value "16", which is "7" plus the value of LEVELS, which is "9". Similarly, the fourth entry to the right of the entry with the value "7" has the value "25", which is "7" plus twice the value of LEVELS.

Continuing with the illustrative HALF MATRIX depicted in Fig. 4H, the "22" value to the left of the entry containing the value "7" is based on the value "4" near the right edge of the EXP MATRIX expanded matrix and HALF MATRIX. With reference to the entry containing the value "4", the second entry to the right of that entry receives the value "13" (which is "4" plus "9", the value of LEVELS). Since the HALF MATRIX does not extend four entries to the right of the entry containing the value "4", the second entry based on that entry value is the second entry from the left edge of the HALF MATRIX. That entry receives the value "22", which is "4" plus the quantity ("2" time "9"), with "9" being the value of LEVELS. The remaining non-zero entries in the HALF MATRIX are provided in the same way.

The ternary replicator 33 transmits the HALF MATRIX and the final value of LEVELS to the checkerboard replicator 34. In response to the HALF MATRIX and LEVELS value from the ternary replicator 33, the checkerboard replicator 34 generates a FULL MATRIX, which is depicted in Fig. 4I, all of whose values are non-zero. Specifically, for each entry in the HALF MATRIX containing a non-zero value, a corresponding entry is made in the FULL MATRIX containing the same non-zero value. For each entry in the HALF MATRIX containing a zero value, the corresponding entry in the FULL MATRIX receives the value comprising the sum of the value in the entry to the left, plus the value of LEVELS received from the ternary replicator 33. For entries along the left edge of the HALF MATRIX containing value zero, the values generated for the corresponding entries in the FULL MATRIX are based on the contents of the entries in the column along the right edge of the HALF MATRIX. Otherwise stated, for each entry in the HALF MATRIX which does not have the value zero:

FULL MATRIX [i, (j+l) mod COLS] = HALF MATRIX [i,j] + LEVELS

In addition, the checkerboard replicator 34 generates a new value for the variable LEVELS to reflect the increased number of diverse values in the FULL MATRIX. Specifically, the new value for LEVELS generated by the checkerboard replicator 34 is two times the value for LEVELS which it received from the ternary replicator 33.

The remaining elements of the dither matrix generator 10 depicted in Fig. 3 normalize the matrix, which provides the dither values in the dither matrix between zero and one, and transpose the matrix depending on the aspect ratio provided by the value of ASPECT from the external source.

Specifically, the checkerboard replicator 34 transmits the FULL MATRIX and LEVELS value to a matrix normalizer 35, which normalizes the FULL MATRIX entries by reducing the value in each entry by one and dividing the results by the LEVELS value to produce a NORM MATRIX normalized matrix. The contents of the entries in the NORM MATRIX normalized matrix range from zero to a value less than one. The matrix normalizer 35 transmits the NORM MATRIX normalized matrix to a transpose selector 36, which transmits either the NORM MATRIX or its transpose as the DITHER MATRIX in response to the value of ASPECT received from the external source. If the value of ASPECT is less than or equal to one, the NORM MATRIX, depicted at the top of Fig. 4J, is transmitted as the dither matrix. On the other hand, if the value of ASPECT is greater than one, the dither matrix is the transpose of the NORM MATRIX normalized matrix, as depicted at the bottom of Fig. 4J.

The transpose selector 36 also transmits ROWS and COLS columns values to the dither matrix memory 11 (Figs. 1 and 2) in response to the ROWS and COLS column values from the hexagonal matrix memory 30. Specifically, if the ASPECT value is less than or equal to one, the ROWS and COLS columns values transmitted by the transpose selector 36 are the same as the received values. On the other hand, if the value of ASPECT is greater than one, the transmitted ROWS and COLS columns values constitute the transposition of the received ROWS and COLS values.

## 3. Summary

The dither matrix generator 10 (Figs. 1 and 2) depicted in detail in Fig. 3, produces a dither matrix in a rectangular form based on a hexagonal dither matrix. The use of the non-square dither matrix, and specifically the use of the hexagonal dither matrix, enables the systems depicted in Figs. 1 and 2 to avoid the generation of undesirable artifacts, and in particularly banding, in a dithered image whose the aspect ratio differs from one.

The foregoing description has been limited to a specific embodiment of this invention. It will be apparent, however, that variations and modifications may be made to the invention, with the attainment of some or all of the advantages of the invention. Therefore, it is the object of the appended claims to cover all such variations and modifications as come within the true spirit and scope of the invention.

**Claims**

1. A system for producing dithered image values in response to continuous tone image values from an external source comprising:

A. dither matrix generator means for producing a rectangular dither matrix comprising a plurality of dither threshold values based on a dither matrix designed for a non-rectangular grid pattern;

B. dither matrix memory means including a plurality of addressable storage locations arranged in rows and columns for receiving and storing the rectangular dither matrix from said dither matrix generator means;

C. processing means for iteratively receiving the continuous tone image values from said external source, and, for each continuous tone image value, selecting a dither threshold value from a storage location in said dither matrix memory means and using the dither threshold value and continuous tone image value to produce a dithered output value.

2. A system for producing dithered images as claimed in claim 1 in which the non-rectangular grid pattern is a hexagonal grid pattern.

*FIG. 1*

FIG. 2

FIG.3

0293214

FIG.4A

FIG 4B-I

FIG 4B-2

0293214

FIG 4C-1

0293214

FIG 4C-2

0293214

FIG.4D

$\eta = 1$

```
      2   3
   3   1   2
     2   3
```

**FIG. 4E-1**

$\eta = 2$

```
         3
   2   5   8   2
     7   1   4
   3   6   9   3
         2
```

**FIG. 4E-2**

$\eta = 3$

```
    2  11  20    3
 18  27   7  16  25
 22   5  14  23   6  15
3  12  21   1  10  19   2
 25   8  17  26   9  18
   15  24   4  13  22
      2  11  20    3
```

**FIG.4E-3**

$\eta = 4$

```
                  3
         22  49  76  25
       18  45  72  12  39  66  15
   2  29  56   5  32  59   8  35  62   2
     78  27  54  81  21  48  75  24  51
  11  38  65  14  41  68  17  44  71  11
     58   7  34  61   1  28  55   4  31
  20  47  74  23  50  77  26  53  80  20
     67  16  43  70  10  37  64  13  40
   3  30  57   6  33  60   9  36  63   3
     25  52  79  19  46  73  22
       15  42  69  18
                  2
```

**FIG.4E-4**

0293214

```
  2  83 164   11  92 173   20 101 182    3
    150 231  78 159 240   58 139 220   67 148 229
      208   29 110 191   38 119 200   47 128 209   30 111
       18  99 180   27 108 189    7  88 169   16  97 178   25
        154 235   56 137 218   65 146 227   74 155 236   57 138 219
         198   45 126 207   54 135 216   34 115 196   43 124 205   52 133
          22 103 184    5  86 167   14  95 176   23 104 185    6  87 168   15
         144 225   72 153 234   81 162 243   61 142 223   70 151 232   79 160 241
        202   49 130 211   32 113 194   41 122 203   50 131 212   33 114 195   42 123
       3  84 165   12  93 174   21 102 183    1  82 163   10  91 172   19 100 181    2
        229   76 157 238   59 140 221   68 149 230   77 158 239   60 141 222   69 150
         111 192   39 120 201   48 129 210   28 109 190   37 118 199   46 127 208
          25 106 187    8  89 170   17  98 179   26 107 188    9  90 171   18
           219   66 147 228   75 156 237   55 136 217   64 145 226   73 154
            133 214   35 116 197   44 125 206   53 134 215   36 117 198
             15  96 177   24 105 186    4  85 166   13  94 175   22
              241   62 143 224   71 152 233   80 161 242   63 144
               123 204   51 132 213   31 112 193   40 121 202
 η = 5           2  83 164   11  92 173   20 101 182    3
```

# FIG. 4E-5

0293214

ORDER = 1

```
    0   2   0   3   0   1          MAXVAL   = 3
                                   ROWS     = 2
    3   0   1   0   2   0          H_COLS   = 6
```

*FIG. 4F-1*

ORDER = 2

```
    0   7   0   1   0   4          MAXVAL   = 9
                                   ROWS     = 6
    3   0   6   0   9   0          H_COLS   = 6

    0   8   0   2   0   5

    1   0   4   0   7   0

    0   9   0   3   0   6

    2   0   5   0   8   0
```

*FIG. 4F-2*

ORDER = 3

```
    0  22   0   5   0  14   0  23   0   6   0  15   0  24   0   4   0  13      MAXVAL   = 27
                                                                              ROWS     =  6
    3   0  12   0  21   0   1   0  10   0  19   0   2   0  11   0  20   0      H_COLS   = 18

    0  25   0   8   0  17   0  26   0   9   0  18   0  27   0   7   0  16

    6   0  15   0  24   0   4   0  13   0  22   0   5   0  14   0  23   0

    0  19   0   2   0  11   0  20   0   3   0  12   0  21   0   1   0  10

    9   0  18   0  27   0   7   0  16   0  25   0   8   0  17   0  26   0
```

*FIG. 4F-3*

0293214

```
0  7  0  1  0  4            ROWS   = 6
                            H_COLS = 6
3  0  6  0  9  0

0  8  0  2  0  5

1  0  4  0  7  0

0  9  0  3  0  6

2  0  5  0  8  0
```

(a) Hex Matrix

```
0  0  0  7  0  0  0  0  0  1  0  0  0  0  0  4  0  0     ROWS = 6
                                                        COLS = 18
3  0  0  0  0  0  6  0  0  0  0  0  9  0  0  0  0  0

0  0  0  8  0  0  0  0  0  2  0  0  0  0  0  5  0  0

1  0  0  0  0  0  4  0  0  0  0  0  7  0  0  0  0  0

0  0  0  9  0  0  0  0  0  3  0  0  0  0  0  6  0  0

2  0  0  0  0  0  5  0  0  0  0  0  8  0  0  0  0  0
```

(b) Expanded Matrix

# FIG. 4G

```
0   0   0   7   0   0   0   0   0   1   0   0   0   0   0   4   0   0      LEVELS = 9
3   0   0   0   0   0   6   0   0   0   0   0   9   0   0   0   0   0
0   0   0   8   0   0   0   0   0   2   0   0   0   0   0   5   0   0
1   0   0   0   0   0   4   0   0   0   0   0   7   0   0   0   0   0
0   0   0   9   0   0   0   0   0   3   0   0   0   0   0   6   0   0
2   0   0   0   0   0   5   0   0   0   0   0   8   0   0   0   0   0
```

(a) Expanded Matrix

```
0   22  0   7   0   16  0   25  0   1   0   10  0   19  0   4   0   13     LEVELS = 27
3   0   12  0   21  0   6   0   15  0   24  0   9   0   18  0   27  0
0   23  0   8   0   17  0   26  0   2   0   11  0   20  0   5   0   14
1   0   10  0   19  0   4   0   13  0   22  0   7   0   16  0   25  0
0   24  0   9   0   18  0   27  0   3   0   12  0   21  0   6   0   15
2   0   11  0   20  0   5   0   14  0   23  0   8   0   17  0   26  0
```

(b) Half Matrix

# FIG 4H

```
0  22  0   7   0  16  0  25  0   1   0  10  0  19  0   4   0  13     LEVELS = 27
3   0  12  0  21   0  6   0  15  0  24  0   9  0  18  0  27  0
0  23  0   8   0  17  0  26  0   2   0  11  0  20  0   5   0  14
1   0  10  0  19   0  4   0  13  0  22  0   7  0  16  0  25  0
0  24  0   9   0  18  0  27  0   3   0  12  0  21  0   6   0  15
2   0  11  0  20   0  5   0  14  0  23  0   8  0  17  0  26  0
```

(a) Half Matrix

```
40 22 49  7  34 16 43 25 52  1  28 10 37 19 46  4  31 13    LEVELS = 54
3  30 12 39  21 48  6 33 15 42 24 51  9  36 18 45 27 54
41 23 50  8  35 17 44 26 53  2  29 11 38 20 47  5  32 14
1  28 10 37 19 46  4  31 13 40 22 49  7  34 16 43 25 52
42 24 51  9  36 18 45 27 54  3  30 12 39 21 48  6  33 15
2  29 11 38 20 47  5  32 14 41 23 50  8  35 17 44 26 53
```

(b) Full Matrix

FIG.41

```
39 21 48 8   33 15 42 24 51 0   27 9   36 18 45 3   30 12      ROWS = 6
 2 29 11 38 20 47 5   32 14 41 23 50 8   35 17 44 26 53        COLS = 18
40 22 49 7   34 16 43 25 52 1   28 10 37 19 46 4   31 13
 0 27 9   36 18 45 3   30 12 39 21 48 8   33 15 42 24 51
41 23 50 8   35 17 44 26 53 2   29 11 38 20 47 5   32 14
 1 28 10 37 19 46 4   31 13 40 22 49 7   34 16 43 25 52
```

(1/54 x)

(a) Dither Matrix for ASPECT ≤ 1

```
39 2   40 0   41 1        ROWS = 18
21 29 22 27 23 28         COLS = 6
48 11 49 9   50 10
 8 38 7   36 8   37
33 20 34 18 35 19
15 47 16 45 17 46
42 5   43 3   44 4
24 32 25 30 26 31
51 14 52 12 53 13
 0 41 1   39 2   40
27 23 28 21 29 22
 9 50 10 48 11 49
36 8   37 8   38 7
18 35 19 33 20 34
45 17 46 15 47 16
 3 44 4   42 5   43
30 26 31 24 32 25
12 53 13 51 14 52
```

(1/54 x)

FIG.4J

(b) Dither Matrix for ASPECT > 1